Europäisches Patentamt

European Patent Office

Office européen des brevets

(19)

(11) EP 0 833 189 A2

(12) EUROPÄISCHE PATENTANMELDUNG

(43) Veröffentlichungstag:
01.04.1998  Patentblatt 1998/14

(51) Int Cl.⁶: **G02F 1/35**

(21) Anmeldenummer: 97440083.0

(22) Anmeldetag: 22.09.1997

(84) Benannte Vertragsstaaten:
AT BE CH DE DK ES FI FR GB GR IE IT LI LU MC NL PT SE

(30) Priorität: 28.09.1996  DE 19640070

(71) Anmelder: ALCATEL ALSTHOM COMPAGNIE GENERALE D'ELECTRICITE
75008 Paris (FR)

(72) Erfinder: Bülow, Henning, Dr.
70597 Stuttgart (DE)

(74) Vertreter: Knecht, Ulrich Karl, Dipl.-Ing. et al
Alcatel Alsthom
Intellectual Property Department,
Postfach 30 09 29
70449 Stuttgart (DE)

(54) **Wellenlängenwandler, der für hohe Bitfolgefrequenzen geeignet ist**

(57)    Es ist ein Wellenlängenwandler angegeben, der als wesentlichen Bestandteil ein Sagnac-Interferometer (NOLM, nonlinear optical loop mirror) hat. Um den Wellenlängenwandler auch für Signale verwenden zu können, die als NRZ-Signale vorliegen (NRZ, non-return-to-zero) hat der Wellenlängenwandler erfindungsgemäß einen 3x3-Koppler (2) mit sechs Anschlüssen (6 - 11).

Fig.1

**Beschreibung**

Die Erfindung betrifft einen Wellenlängenwandler gemäß dem Oberbegriff des Anspruchs 1.

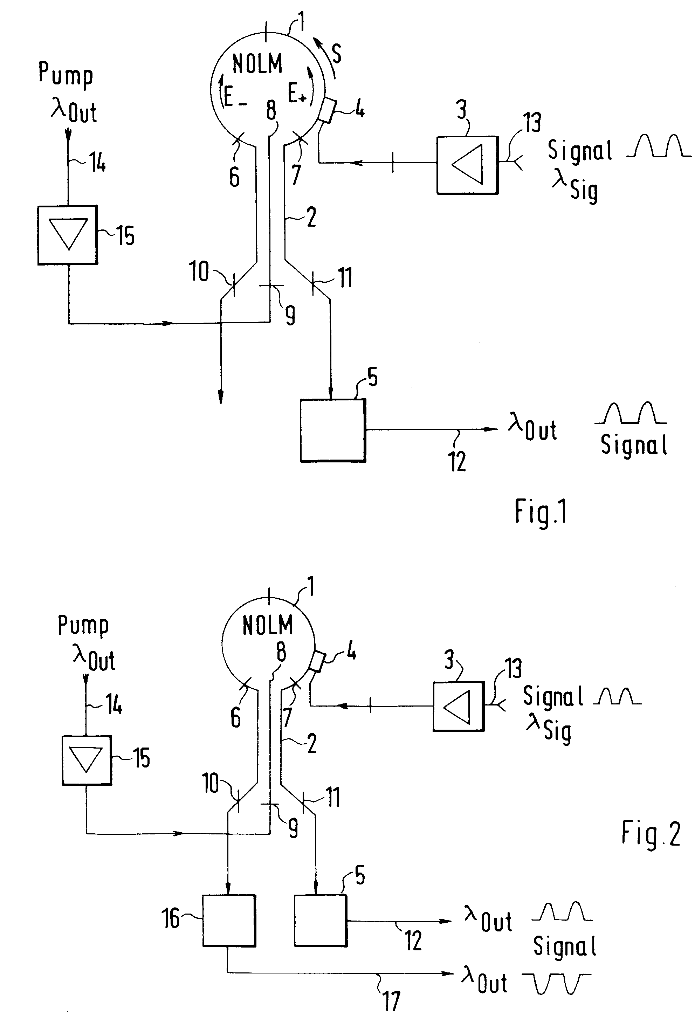

Einen solchen Wellenlängenwandler zeigt z. B. D. Mahgerefteh et al in "All-Optical 1.5 µm to 1.3 µm Wavelength Conversion in a Walk-Off Compensating Nonlinear Optical Loop Mirror", IEEE Photonics Technology Letters, Vol. 7, No. 5, May 1995, Seiten 497 bis 499. Dieser in Fig. 2 gezeigte Wellenlängenwandler hat als zentralen Bestandteil ein nichtlineares optisches Sagnac-Interferometer (nonlinear optical loop mirror, NOLM). Eine Faser, die aus einer Monomodefaser (3.58 km SM Fiber) und einer dispersionsverschobenen Faser (2.6 km DS Fiber) zusammengesetzt ist, ist mit Hilfe eines 2x2-Kopplers mit vier Anschlüssen zu einem Ring geformt. An einem der beiden dabei freibleibenden Anschlüsse des Kopplers wird von einem Laser ausgesendetes Licht (1.3 µm Clock) in den NOLM eingekoppelt, das sich im NOLM im und entgegen dem Uhrzeigersinn ausbreitet. Mit dem anderen freien Anschluß des Kopplers ist ein optischer Empfänger verbunden. Durch einen weiteren Koppler (WDM) wird Signallicht (1.5 µm Data) so in den NOLM eingekoppelt, daß es sich im NOLM im Uhrzeigersinn ausbreitet. Die sich in entgegengesetzter Richtung ausbreitenden Anteile des Lichts (1.3 µm Clock) unterliegen in Abwesenheit von Signallicht (1.5 µm Data) den gleichen Ausbreitungsbedingungen. Im Koppler interferieren die beiden Anteile des Lichts (1.3 µm Clock) konstruktiv und treten an dem Anschluß aus, an dem das Licht (1.3 µm Clock) zugeführt wird. Durch das Signallicht (1.5 µm Data) kann der NOLM aus dem Gleichgewicht gebracht werden; dann tritt ein Teil des Lichts (1.3 µm Clock) an dem Anschluß des Kopplers aus, an dem kein Licht (1.3 µm Clock) zugeführt wird. Das Signallicht (1.5 µm Data) bestimmt somit, wann Licht (1.3 µm Clock) an diesem Anschluß des Kopplers austritt. Der optische Empfänger detektiert das Licht (1.3 µm Clock), das die Information des Signallichts (1.5 µm Data) trägt.

Aus H. Bülow et al, "System Performance of a Nonlinear Optical Loop Mirror Used as Demultiplexer for Bitrates of 40 Gbit/s and Beyond", Proceedings SPIE, Vol. 2449, 1995, Seiten 158 - 167, ist eine Verwendung eines NOLM als Demultiplexer bekannt, dem ein RZ Datensignal (RZ, return-to-zero) zugeführt wird. Aus dieser Veröffentlichung ist auch ein Maß bekannt, das angibt, wie gut an einem Ausgang ein 1-Bit und ein 0-Bit voneinander zu unterscheiden sind; dieses Maß ist als ein Verhältnis der Leistungen eines 1-Bits und eines 0-Bits (extinction ratio, ER) definiert. Dieses Verhältnis ER ergibt sich aus einen den NOLM beschreibenden Parameter Transmission T, der eine Funktion einer Phasendifferenz $\Delta\varphi$ ist. Breitet sich im NOLM nur Signallicht aus, ist die Transmission Null. In Fig. 5 (Bülow) ist die Transmission T als Funktion der Phasendifferenz $\Delta\varphi$ dargestellt.

Das Verhältnis ER soll einen möglichst hohen Wert haben, z. B. ER > 10 dB. Zudem soll ein solch hoher Wert mit möglichst geringer dem NOLM zuzuführender optischer Leistung erreicht werden. Theoretische Überlegungen (Bülow) und Meßungen an bekannten Wellenlängenwandlern, die einen NOLM verwenden, haben ergeben, daß für NRZ Signale (NRZ, non-return-to-zero) das Verhältnis ER ≈ 0 dB beträgt und damit zu gering ist, um ein brauchbares Ausgangssignal und eine Wellenlängenwandlung zu erzielen.

Der Erfindung liegt die Aufgabe zugrunde, einen Wellenlängenwandler anzugeben, dessen Funktion unabhängig von ihm zugeführten Signalen ist. Ein diese Aufgabe lösender Wellenlängenwandler ist Gegenstand des Anspruchs 1. Vorteilhafte Ausgestaltungen der Erfindung sind in den Unteransprüchen angegeben.

Vorteilhaft an der Erfindung ist, daß der Wellenlängenwandler neben seinen Eigenschaften, für Signale einer hohen Bitfolgefrequenz geeignet und unabhängig von den ihm zugeführten Signalen zu sein, auch die Anforderung der geringen optischen Leistung für das Signallicht erfüllt. Außerdem ist es ein Vorteil der Erfindung, daß das aus dem Wellenlängenwandler austretende Licht als invertiertes oder nichtinvertiertes Signal vorliegt.

Die Erfindung wird im folgenden beispielhaft anhand von Ausführungsbeispielen näher erläutert. Es zeigen:

Fig. 1 ein erstes Ausführungsbeispiel eines Wellenlängenwandlers,

Fig. 2 ein weiteres Ausführungsbeispiel eines Wellenlängenwandlers, und

Fig. 3 ein Transmissionsdiagramm für einen erfindungsgemäß verwendeten 3x3- Koppler.

Im folgenden werden zwei Ausführungsbeispiele eines Wellenlängenwandlers anhand von schematischen Zeichnungen erläutert. Daran anschließend werden deren Funktionsweisen und der Grundgedanke der Erfindung, daß nämlich durch die Verwendung eines 3x3-Kopplers anstelle eines 2x2-Kopplers eine Wellenlängenwandlung von NRZ Signalen ermöglicht wird, detaillierter erklärt.

In Fig. 1 ist schematisch ein Ausführungsbeispiel eines Wellenlängenwandlers gezeigt, der als zentralen Bestandteil ein aus einer Faser 1 aufgebautes Sagnac-Interferometer hat; dieses Sagnac-Interferometer wird im folgenden als NOLM (nonlinear optical loop mirror) bezeichnet. Außer der Faser 1 hat der NOLM noch zwei Koppler 2, 4. Der Koppler 4 ist in die Faser 1 eingefügt und dient dazu, durch ein Datensignal moduliertes Signallicht in die Faser 1 einzukoppeln. Das Signallicht wird einem Eingang 13 zugeführt, der durch eine Faser mit dem Koppler 4 verbunden ist. In die Faser ist ein optischer Verstärker 3 eingefügt, der das Signallicht bei Bedarf verstärkt. Das Signallicht hat z. B. eine Wellen-

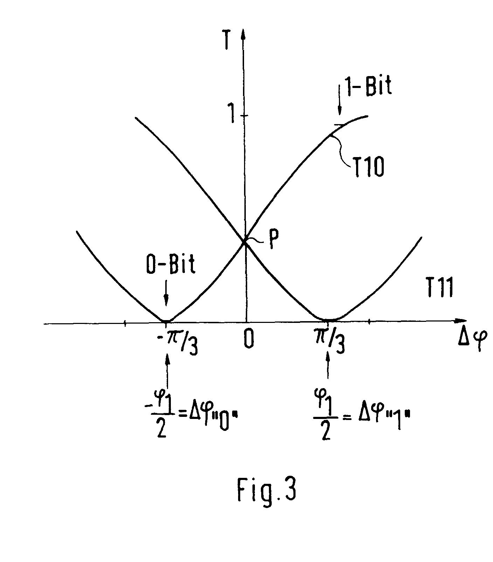

länge $\lambda_{Sig}$ = 1550 nm. Weitere Angaben zum Signallicht werden in Zusammenhang mit Fig. 3 gegeben.

Der Koppler 2 ist erfindungsgemäß ein 3x3-Koppler, d. h. er hat sechs Anschlüsse 6 bis 11. Durch die Anschlüsse 6, 7 ist die Faser 1 zu einem Ring geformt; der Anschluß 8 bleibt frei. In Fig. 1 und in Fig. 2 sind die Anschlüsse 6 bis 1 1 so gezeichnet, daß die Anschlüsse 6, 7, 8 (NOLMseitig) gegenüber den Anschlüssen 9, 10, 11 (ein- und ausgangsseitig) angeordnet sind. Der Anschluß 9 ist im Ausführungsbeispiel durch eine Faser mit einem optischen Verstärker 15, vorzugsweise mit einem faseroptischen Verstärker (EDFA, Erbium doped fiber amplifier) verbunden. Der optische Verstärker 15 kann u. U. auch entfallen. Einem Eingang 14 des optischen Verstärkers 15 ist Licht zuführbar, das für die folgenden Ausführungen als Pumplicht bezeichnet wird. Ein nicht dargestellter Laser sendet das Pumplicht mit konstanter optischer Leistung aus; das Pumplicht hat z. B. eine Wellenlänge $\lambda_{Out}$ = 1532 nm. Mit dem optischen Verstärker 15 kann das Pumplicht auf einen gewünschten Wert verstärkt werden. Mit dem Anschluß 11 ist ein optisches Filter 5 verbunden, das Licht der Wellenlänge $\lambda_{Sig}$ sperrt, so daß an einem Ausgang 12 des optischen Filters 5 nur Licht der Wellenlänge $\lambda_{Out}$ austritt.

In Fig. 1 ist am Eingang 13 und am Ausgang 12 ein kurzer Signalabschnitt eingezeichnet und dort als "Signal" bezeichnet. Am Eingang 14 zugeführtes Pumplicht ist dort als "Pump" bezeichnet. Außerdem sind Bezugszeichen $E_{-}$, $E_{+}$ und S eingezeichnet, auf die in Verbindung mit Fig. 3 Bezug genommen wird. Die Koppler 2, 4 und der Lichtwellenleiter 1 sind polarisationserhaltend, d. h. Licht ändert seine Polarisation während der Ausbreitung in den Kopplern 2, 4 und in dem Lichtwellenleiter 1 nicht. Dadurch wird erreicht, daß der Wellenlängenwandler stabil ist. Koppelt man das Pumplicht und das Signallicht zusätzlich so in in den NOLM ein, daß sie sich im Lichtwellenleiter 1 in einer gemeinsamen Polarisationshauptachse ausbreiten, dann sind die 0-Bit und 1-Bit Zustände jeweils stabil. Das Einkoppeln von Licht in eine Polarisationshauptachse eines Lichtwellenleiters kann z. B. dadurch erfolgen, daß 90°-Spleiße verwendet werden.

In Fig. 2 ist ein zweites Ausführungsbeispiel eines Wellenlängenwandlers gezeigt, dessen Aufbau prinzipiell gleich dem in Fig. 1 gezeigten Wellenlängenwandler ist. Für bereits in Fig. 1 genannte Bestandteile des Wellenlängenwandlers werden die gleichen Bezugszeichen verwendet. Einziger Unterschied zu dem in Fig. 1 gezeigten Wellenlängenwandler ist, daß in Fig. 2 mit dem Anschluß 10 des Kopplers 2 ein optisches Filter 16 verbunden ist, das die gleichen Eigenschaften wie das optische Filter 5 hat. Ansonsten entspricht der Wellenlängenwandler in Fig. 2 dem in Fig. 1 gezeigten Wellenlängenwandler; auch die verwendeten Bestandteile haben die gleichen Eigenschaften.

Dieses Ausführungsbeispiel eines Wellenlängenwandlers hat den Vorteil, daß zusätzlich zur Wellenlängenwandlung eine Signalinvertierung erfolgt: An einem Ausgang 17 des optischen Filters 16 tritt Licht aus, das einen Signalverlauf hat, der invertiert zum Signalverlauf des Lichts ist, das am Ausgang 12 austritt. In Fig. 2 sind zur Verdeutlichung die beiden Signalverläufe eingezeichnet. Der Koppler 2 hat prinzipiell zwei Ausgänge 4, 6. Durch eine Wahl der optischen Leistung für das Signallicht kann ein Arbeitspunkt für den Wellenlängenwandler festgelegt werden, d. h. es gibt zwei Betriebsweisen für den Wellenlängenwandler, nämlich invertierend und nicht invertierend.

Die verwendeten optischen Filter 5, 16 dienen dazu, Signallicht der Wellenlänge $\lambda_{Sig}$ zu sperren. Alternativ zur Verwendung von optischen Filtern an den genannten Anschlüssen 10, 11 kann in den Lichtwellenleiter 1 ein wellenlängenselektiver Koppler (WDM) eingefügt sein, der das Signallicht der Wellenlänge $\lambda_{Sig}$ aus dem Lichtwellenleiter 1 auskoppelt, nachdem eine Wechselwirkung mit dem Pumplicht stattgefunden hat. Diese Möglichkeit ist z. B. aus der Veröffentlichung von D. Mahgerefteh et al bekannt.

Im folgenden wird die Funktionsweise des Wellenlängenwandlers anhand von Fig. 3 unter Bezugnahme auf Fig. 1 detaillierter erklärt.

In Fig. 3 ist schematisch ein Transmissionsdiagramm des Kopplers 2 gezeigt; die Transmission T ist als Funktion der Phasendifferenz $\Delta\varphi$ dargestellt. Mit T10 ist die Transmission für den Anschluß 10 bezeichnet und mit T1 1 die Transmission für den Anschluß 1 1. Die Transmission T10 hat bei $-\pi/3$ ein Minimum (T10 = 0) und die Transmission T11 bei $+\pi/3$ (T1 1 = 0). In Fig. 3 liegt ein Schnittpunkt der beiden Transmissionen T10 und T11 bei $\Delta\varphi = 0$ in einem Punkt P der Ordinate.

Im in Fig. 1 gezeigten Lichtwellenleiter 1 breiten sich mehrer Lichtanteile aus: Lichtanteile $E_{-}$ und $E_{+}$, die aus dem Pumplicht hervorgehen und sich im Lichtwellenleiter 1 gegensinnig ausbreiten, und Lichtanteil S des Signallichts. Wird kein Signallicht in den Lichtwellenleiter 1 eingekoppelt, dann erfahren die beiden Lichtanteile $E_{-}$ und $E_{+}$ keine Phasenmodulation und die Phasendifferenz $\Delta\varphi$ ist nach einem Umlauf 0 ($\Delta\varphi = 0$). Am Ausgang tritt Licht aus, dessen Intensität durch die Transmission T im Punkt P bestimmt wird.

Ein NRZ-Signal hat im Mittel gleichviele 1-Bits und 0-Bits. Wird dem Wellenlängenwandler Signallicht zugeführt, das ein NRZ-Signal ist, dann "sieht" der ihr entgegenlaufende Lichtanteil E im Mittel den Lichtanteil S mit der halben optischen Leistung, die ein 1-Bit hat, da ja nur 50% 1-Bits sind. Bedingt durch den bekannten Kerr-Effekt ist der Lichtanteil $E_{-}$ dann nach einem Umlauf um eine Phase $\varphi_1/2$ verzögert. Das Signallicht kann ein bitweises NRZ-Signal sein oder NRZ-Signal, das aus Datenpaketen besteht, in beiden Fällen handelt es sich um ein NRZ-Signal.

Der Lichtanteil $E_{+}$, der gleichsinnig mit dem Lichtanteil S des Signallichts umläuft, "sieht" bei einem 1-Bit die gesamte optische Leistung und bei einem 0-Bit keine optische Leistung. Folglich ist der Lichtanteil $E_{+}$ bei einem 1-Bit um die Phase $\varphi_1$ verzögert und bei einem

0-Bit um $\varphi = 0$. Als Phasendifferenz $\Delta\varphi$ am Koppler 2 ergibt sich somit:

$$\Delta\varphi = (\text{Verzögerung von } E_+) - (\text{Verzögerung von } E_-),$$

also:

$$\Delta\varphi_{"1"} = \varphi_1 - \varphi_1/2 = \varphi_1/2$$

für ein 1-Bit, und

$$\Delta\varphi_{"0"} = 0 - \varphi_1/2 = -\varphi_1/2$$

für ein 0-Bit.

Betragsmäßig sind die Phasenverschiebungen für ein 1-Bit und ein 0-Bit gleich. Da jedoch die Transmissionen T10 und T1 1 in Fig. 3 jeweils um $\pi/3$ bezüglich $\Delta\varphi = 0$ verschoben sind, ergeben sich trotz der betragsmäßigen Gleichheit unterschiedliche Transmissionen für ein 1-Bit und ein 0-Bit. In Fig. 3 ist dies für die Transmission T10 eingezeichnet.

Aus Fig. 3 ist auch die bereits erwähnte Invertierung des Signals erkennbar: ist am Anschluß 10 die Transmission T10 ungefähr 1, ist am Anschluß 1 1 die Transmission T11 gleich Null.

## Patentansprüche

1. Wellenlängenwandler zum Wandeln von Signallicht einer ersten Wellenlänge ($\lambda_{Sig}$) in Licht einer zweiten Wellenlänge ($\lambda_{Out}$),

    - bei dem ein Lichtwellenleiter (1) und ein erster und zweiter Koppler (2, 4) vorhanden sind,

    - bei dem ein erstes Ende des Lichtwellenleiters (1) mit einem ersten Anschluß (6) des ersten Kopplers (2) und ein zweites Ende des Lichtwellenleiters (1) mit einem zweiten Anschluß (7) des Kopplers (2) verbunden ist,

    - bei dem einem dritten Anschluß (9) des ersten Kopplers (2) Licht der zweiten Wellenlänge ($\lambda_{Out}$) zuführbar ist, das der erste Koppler (2) in den Lichtwellenleiter (1) einkoppelt,

    - bei dem an einem vierten Anschluß (11) des ersten Kopplers (2) Licht der zweiten Wellenlänge ($\lambda_{Out}$) austreten kann, das einen dem Signallicht entsprechenden Verlauf hat, und

    - bei dem das Signallicht der ersten Wellenlänge ($\lambda_{Sig}$) dem Lichtwellenleiter (1) durch den zweiten Koppler (4), der in den Lichtwellenleiter (1) eingefügt ist, zuführbar ist,

dadurch gekennzeichnet, daß der erste Koppler (2) ein Koppler mit sechs Anschlüssen (6 - 1 1) ist, der das dem dritten Anschluß (9) zuführbare Licht der zweiten Wellenlänge ($\lambda_{Out}$) auf den ersten Anschluß (6), den zweiten Anschluß (7) und einen fünften Anschluß (8) aufteilt.

2. Wellenlängenwandler nach Anspruch 1, bei dem der Lichtwellenleiter (1) und der erste und zweite Koppler (2, 4) polarisationserhaltend sind.

3. Wellenlängenwandler nach Anspruch 2, bei dem das Signallicht und das Licht der zweiten Wellenlänge ($\lambda_{Out}$) so zuführbar sind, daß sie sich im Lichtwellenleiter (1) und im ersten Koppler (2) in einer gemeinsamen Polarisationshauptachse ausbreiten.

4. Wellenlängenwandler nach Anspruch 1 oder 3, bei dem an den vierten Anschluß (11) des ersten Kopplers (2) ein erstes optisches Filter (5) angeschlossen ist, das ausgekoppeltes Licht der zweiten Wellenlänge ($\lambda_{Out}$) durchläßt und ausgekoppeltes Signallicht der ersten Wellenlänge ($\lambda_{Sig}$) sperrt.

5. Wellenlängenwandler nach Anspruch 1 oder 3, bei dem an den vierten Anschluß (11) des ersten Kopplers (2) ein erstes optisches Filter (5) angeschlossen ist und an einen sechsten Anschluß (10) des Kopplers (2) ein zweites optisches Filter (16) angeschlossen ist, bei dem das erste und zweite optische Filter (5, 16) ausgekoppeltes Licht der zweiten Wellenlänge ($\lambda_{Out}$) durchlassen und ausgekoppeltes Signallicht der ersten Wellenlänge ($\lambda_{Sig}$) sperren, und bei dem vom ersten optischen Filter (5) durchgelassenes Licht der zweiten Wellenlänge ($\lambda_{Out}$) einen Signalverlauf hat, der invertiert zum Signalverlauf des vom zweiten optischen Filter (5) durchgelassenen Lichts der zweiten Wellenlänge ($\lambda_{Out}$) ist.

6. Wellenlängenwandler nach Anspruch 1, bei dem in den Lichtwellenleiter (1) ein wellenlängenselektiver Koppler eingefügt ist, der dazu dient, Signallicht der ersten Wellenlänge ($\lambda_{Sig}$) aus dem Lichtwellenleiter (1) auszukoppeln.

Fig.1

Fig.2

Fig.3